Europäisches Patentamt

European Patent Office

Office européen des brevets

(19)

(11) Publication number: **0 156 490 B1**

(12) # EUROPEAN PATENT SPECIFICATION

(45) Date of publication of patent specification: **25.03.92**  (51) Int. Cl.⁵: **C10G  11/05**

(21) Application number: **85301045.2**

(22) Date of filing: **18.02.85**

(54) ZSM-5 catalytic cracking processs using large size ZSM-5 crystals.

(30) Priority: **12.03.84 US 588253**

(43) Date of publication of application:
**02.10.85 Bulletin  85/40**

(45) Publication of the grant of the patent:
**25.03.92 Bulletin  92/13**

(84) Designated Contracting States:
**BE DE FR GB IT NL**

(56) References cited:
**EP-A- 0 021 674**
**EP-A- 0 044 631**
**US-A- 4 100 262**
**US-A- 4 289 606**

(73) Proprietor: **MOBIL OIL CORPORATION**
**150 East 42nd Street**
**New York New York 10017(US)**

(72) Inventor: **Cormier, William Edward, Jr.**
**4140 Henhawk Court**
**Ellicott City, MD 21043(US)**
Inventor: **Stover, William Albert**
**336 South Belvidere Drive**
**Hampstead North Carolina 28443(US)**

(74) Representative: **Cooper, John Anthony et al**
**Mobil Court 3 Clements Inn**
**London WC2A 2EB(GB)**

EP 0 156 490 B1

**Description**

This invention relates to a catalytic cracking process for producing motor fuel using large crystallite ZSM-5 in conjunction with a conventional cracking catalyst to increase gasoline octane number and gasoline plus alkylate yield.

Crystalline zeolites are known to be effective for a wide variety of hydrocarbon conversion processes including the catalytic cracking of gas oil to produce motor fuels as described in U.S. Patents 3,140,249; 3,140,251; 3,140,252; 3,140,253; and 3,271,418. It is known to incorporate a zeolite into a matrix for catalytic cracking.

U.S. 3,702,886 discloses ZSM-5 and its method of preparation. The patent contains examples wherein the crystallite size of ZSM-5 is on the order of 1 micron, e.g., Example 2; examples wherein the crystallite size is less than 1 micron (Example 26) and examples wherein the ZSM-5 has a crystallite size of 8 X 20 microns and "some large cubes to 25 microns" (Example 27).

The use of ZSM-5 with a zeolite cracking catalyst of the X or Y faujasite variety is described in U.S. Patents 3,894,931 and 3,894,933 which disclose the use of ZSM-5 in amounts up to and about 5 to 10 weight percent; the U.S. Patent 3,894,934 discloses the weight ratio of ZSM-5 to large pore zeolite within the range of 1:10 to 3:1.

The addition of ZSM-5 in very small amounts to conventional cracking catalyst is disclosed in U.S. Patent 4,309,279. Only 0.1-0.5 wt.% ZSM-5 added to a conventional cracking catalyst increased gasoline octane. U.S. 4,309,279 is silent as to the crystallite size of the ZSM-5 used.

U.S. 4,309,280 also teaches ZSM-5 and other zeolites in conjunction with a conventional cracking catalyst. The ZSM-5 is stated in Examples 10-13 to have a crystallite size of 0.02-0.05 microns.

It had always been believed that smaller crystal ZSM-5 was better than a large crystal ZSM-5 because the small crystal zeolite aged more slowly. This is reflected in patents such as U.S. 3,781,226 and 3,926,782.

U.S. Patent 3,781,226 dicloses improved results from using zeolites, including ZSM-5 which have particle size of between 0.005 microns and 0.3 microns (col. 4, lines 10-14). ZSM-5 having a crystallite size of 0.04 microns is disclosed in Example 2. Large crystal ZSM-5 is taught in U.S. 4,375,458, with materials having a crystal size at least 1 micron. U.S. 4,100,262 teaches ZSM-5 crystals having a size between 5 x 10 microns and 10 x 20 microns and suggests use of this material in a wide variety hydrocarbon conversion processes. U.S. 4,117,026 discloses ZSM-5 having a crystal size of 1-20 microns and particularly 1.6 microns.

Despite the many improvements made in catalytic cracking and in zeolite catalysis, refiners are still searching for ways to make higher octane gasoline. This is true both for FCC (Fluidized Catalytic Cracking) and TCC (Thermofor Catalytic Cracking), a moving bed process similar to the FCC process operators.

One method of increasing octane number is to raise the reactor temperature. This method, however, is very limited, since many units are not operating at maximum temperatures due to metallurgical limitations. Raising, e.g., FCC reactor temperature increases gas production and may overload the gas plant (i.e. gas compressor and separator).

An alternative method has been to add ZSM-5 to the convention cracking catalyst as described above. Generally, this is associated with a gasoline yield decrease and higher yields of $C_3$ and $C_4$ gaseous products.

European Patent Application 0 044 631 discloses a process for cracking a hydrocarbon chargestock which comprises contacting the hydrocarbon chargestock under cracking conditions with a cracking catalyst comprising an active catalyst component and a matrix, and wherein there has been added to the cracking catalyst in an amount of from 0.01 to 1 weight percent, based on the cracking catalyst, of a shape-selective promoter having a silica to alumina mole ratio of above 12 and a constraint index from 1 to 12, in the form of particles thereof: higher octane unleaded gasoline without undue sacrifice of gasoline yield.

Accordingly, the present invention provides a process for the catalytic cracking of a petroleum fraction in the presence of a cracking catalyst under cracking conditions, during which process coked catalyst is formed and is passed through a regenerator wherein the coke deposits are burned with formation of steam, carbon oxides and hot regenerated catalyst, characterised by adding to the cracking catalyst from 0.1 to 50 weight percent based on cracking catlyst of an additive catalyst comprising a zeolite dispersed in a matrix, said zeolite having a constraint index of 1 to 12, a silica to alumina mole ratio greater than 12, and a crystal size of 0.2 to 5 $\mu$m (microns).

CONVENTIONAL CATALYTIC CRACKING PROCESSES

The present invention may be practiced in both FCC and TCC units.

TCC, or Thermofor Catalytic Cracking, was developed in the early 1940s. Catalyst circulates, in a moving bed, from a catalytic cracking reactor to a catalyst regenerator.

In FCC, or Fluidized Catalytic Cracking, a fluidized bed of catalyst circulates between the FCC reactor and the FCC regenerator.

Both processes operate in the absence of added hydrogen. Both operate at relatively low pressure, usually around atmospheric, or pressure of a few atmospheres.

The temperatures, precise operating conditions, etc. of both the FCC and the TCC process are conventional, and form no part of the present invention.

Typical catalytic cracking reactor temperatures may vary from extremes of 300 to perhaps 600°C, though usually reactor temperatures range from 450-550°C.

Regenerator temperatures are usually higher than reactor temperatures, because coke deposited on the catalyst is burned away, making the catalyst hotter. Typical regenerator temperatures range from about 500-750°C, though most regenerators operate at a temperature of 550-725°C.

It is possible, but not essential, to add a carbon monoxide combustion promoter to an FCC unit. Typical promoters include platinum or palladium, in amounts ranging from 0.1 to 10 wt ppm of circulating FCC catalyst inventory. More details of this process are disclosed in U.S. Patent 4,072,600.

CONVENTIONAL CATALYTIC CRACKING CATALYST

Any conventional catalytic cracking catalyst can be used. Preferred catalysts are those containing a relatively large pore crystalline aluminosilicate, such as zeolite X or zeolite Y, and preferably zeolite Y, in a support such as silica, alumina, silica/alumina, or other conventional catalyst support.

A small number of catalytic cracking units use amorphous catalyst, i.e., catalysts which do not contain any zeolite component. Use of amorphous catalyst is not preferred as zeolite-containing catalysts have much higher activity and are preferred. Nonetheless, the practice of the present invention will improve the operation of catalytic cracking units using all amorphous catalyst.

The conventional catalytic cracking catalyst will usually be in the form of a relatively fine powder for FCC units, and in the shape of much larger particles, such as spheres, large grains, or cylindrical extrudates, for TCC units.

The conventional catalyst forms no part of the present invention. The conventional catalytic cracking catalyst is of course essential to operate conventional FCC or TCC units, but these catalysts are already well known.

LARGE CRYSTAL ADDITIVE

The additive zeolites are characterized by a pore dimension greater than about 5 Angstroms, i.e., it is capable of sorbing paraffins having a single methyl branch as well as normal paraffins. It has a silica to alumina mole ratio of at least 12. Zeolite A, for example, with a silica to alumina ratio of 2.0, is not useful in this invention, and moreover it has no pore dimension greater than about 5 Angstroms.

These zeolites induce profound transformations of aliphatic hydrocarbons to aromatic hydrocarbons in commercially desirable yields and are generally highly effective in alkylation, isomerization, disproportionation and other reactions involving aromatic hydrocarbons. They may have unusually low alumina contents, i.e., high silica to alumina mole ratios, but they are usually very active even with silica to alumina mole ratios exceeding 30, e.g., 500:1, 3,000:1 or higher. This activity is surprising, since catalytic activity of zeolites is generally attributed to framework aluminum atoms and cations associated with these aluminum atoms. These zeolites retain their crystallinity for long periods in spite of the presence of steam even at high temperatures which induce irreversible collapse of the crystal framework of other zeolites, e.g., of the X and A type. Furthermore, carbonaceous deposits, when formed, may be removed by burning at higher than usual temperatures to restore activity. These zeolites exhibit very low coke forming capability, conducive to very long times on-stream between burning regenerations.

They provide constrained access to, and egress from, the intracrystalline free space by virtue of having a pore dimension greater than about 5 Angstroms and pore windows of about a size such as would be provided by 10-membered rings of oxygen atoms. These rings are formed by the regular disposition of the tetrahedra making up the anionic framework of the crystalline zeolite, the oxygen atoms themselves being bonded to the silicon or aluminum atoms at the centers of the tetrahedra. The additive catalysts possess, in combination: A Constraint Index (as defined in U.S. Patent 4,309,279) of about 1 to 12, a silica to alumina mole ratio of at least about 12, and a structure providing constrained access to the intracrystalline free

3

space.

The silica to alumina mole ratio referred to may be determined by conventional analysis. This ratio is meant to represent, as closely as possible, the ratio in the rigid anionic framework of the zeolite crystal and to exclude aluminum in the binder or in cationic or other form within the channels. It is preferred to use zeolites having higher ratios of at least about 30. In some zeolites, the upper limit of silica to alumina mole ratio is unbounded, with values of 30,000 and greater. Such zeolites, after activation, acquire an intracrystalline sorption capacity for normal hexane which is greater than that for water, i.e., they exhibit "hydrophobic" properties. It is believed that this hydrophobic character is advantageous in the present invention.

Suitable additive zeolites include ZSM-5, ZSM-11, ZSM-12, ZSM-23, ZSM-35, ZSM-38 and other similar materials. U.S. Patent No. Re. 29,948 describes ZSM-5.

ZSM-11 is described in U.S. Patent 3,709,979.

ZSM-12 is described in U.S. Patent 3,832,449.

ZSM-23 is described in U.S. Patent 4,076,842.

ZSM-35 is described in U.S. Patent 4,016,245.

ZSM-38 is described in U.S. Patent 4,046,859.

ZSM-48 is described in U.S. Patent 4,397,827.

Natural zeolites may sometimes be converted to this class of zeolites by various activation procedures and other treatments such as gas exchange, steaming, alumina extraction and calcination, alone or in combinations. Natural minerals which may be so treated include ferrierite, brewsterite, stilbite, dachiardite, epistilbite, heulandite and clinoptilolite.

ZSM-5, ZSM-11 ZSM-12, ZSM-23, ZSM-35 and ZSM-38 are preferred, with ZSM-5 particularly preferred.

These zeolites may be in the hydrogen form or they may be base exchanged or impregnated to contain a rare earth cation compliment. Such rare earth cations comprise Sm, Nd, Pr, Ce and La. It is desirable to calcine the zeolite after base exchange.

It is desirable to incorporate additive zeolite in a matrix. Such matrix acts as a binder and imparts greater resistance to the catalyst for the severe temperature, pressure and velocity conditions encountered in many cracking processes.

Matrix materials include both synthetic and natural substances. Such substances include clays, silica and/or metal oxides. The latter may be either naturally occurring or in the form of gelatinous precipitates, sols or gels including mixtures of silica and metal oxides.

The zeolite can be composited with a porous matrix material such as silica-alumina, silica-magnesia, silica-zirconia, silica-thoria, silica-beryllia, silica-titania, as well as ternary compositions such as silica-alumina-thoria, silica-alumina-zirconia, silica-alumina-magnesia and silica-magnesia-zirconia. The matrix can be in the form of a cogel. A mixture of clay in combination with silica or any of the above-specified cogels to form a matrix is highly preferred.

Although steam stability of the large crystal additive zeolites, such as ZSM-5 increases with increasing crystal size, other desirable attributes of a catalyst, such as attrition resistance, actually decrease. Thus, too large a crystallite size is not desirable since the ability to withstand attrition is an important consideration. Thus a crystallite size above the ranges set forth would result in the loss of necessary physical properties.

It is preferred that the maximum dimension in any direction for the additive zeolites be no greater than 20 micron units to obtain acceptable attrition resistance.

ADDITIVE ADDITION

The additive is usually added as a separate additive catalyst. The additive catalyst is used in extremely small amounts which can range from 0.1 to 10 wt % and higher based on total catalyst inventory.

Since the additive zeolites are very active in the fresh state, only very small quantities are necessary to obtain substantial octane improvement in a commercial cracking unit. The additive catalyst can be quickly introduced, because such a small quantity is required as compared to the total inventory of catalyst. The refiner can control the octane increase by controlling the rate of additive catalyst addition. This flexibility helps where feed composition or rate changes occur, when demand for high octane gasoline fluctuates, or when capacity for alkylation varies due to mechanical problems or changes in overall refinery operation.

In commercial practice, the octane gain could be maximized or controlled to operate at maximum light gas handling capability or full alkylation capacity.

One extremely important benefit of the novel process of this invention is that less large crystal size additive, e.g., ZSM-5, is required to accomplish a given objective than the corresponding small crystal size ZSM-5.

4

As additive zeolites are relatively expensive, the instant process has a decided economic advantage over adding more small crystal additive.

The additive catalyst can be introduced at any time during the catalytic cracking process. The additive catalyst can be introduced while the cracking unit is on-stream or down. The refiner can return to conventional operation by eliminating or decreasing the use of additive catalyst. Thus the increase in octane number over the number obtainable under conventional cracking operations can be controlled by controlling the amount of additive catalyst.

The amount of additive required is generally based on the circulating inventory of conventional cracking catalyst. If the additive is first introduced with fresh makeup catalyst, the amount of additive catalyst required is quite high compared to amount of fresh makeup catalyst added. Once the desired concentration of additive in conventional cracking catalyst is achieved, the amount of additive in the fresh makeup catalyst will be much lower than initially.

FEEDSTOCKS

Suitable feedstocks comprise hydrocarbons generally, preferably petroleum fractions having an initial boiling point of at least 200°C, a 50% point of at least 260°C, and an end point in excess of 315°C. Such hydrocarbon fractions include gas oils, residual oils, cycle stocks, whole and topped crudes and heavy hydrocarbon fractions derived by the destructive hydrogenation of coal, tar, pitches, asphalts and the like.

The feedstocks used are conventional, and any feedstock heretofore used in conventional FCC and TCC processes may be used herein.

EXAMPLE 1

A matrix containing 93% $SiO_2$/7% $Al_2O_3$ was prepared by first mixing 1150 parts by weight of water and 242 parts of sodium-silicate (28.8% wt $SiO_2$, 8.9% wt $Na_2O$) and maintaining at 10-15°C (50-60°F). Then, 10.7 parts of concentrated sulfuric acid (97.3% wt) was added to the mixture at a uniform rate over a 30 minute period. Next, a solution prepared by dissolving 30.5 parts of $Al_2(SO_4)_3$ •$xH_2O$ (17.2% wt $Al_2O_3$) in 122 parts of water was added uniformly over a 30 minute period. The temperature of the resulting $SiO_2$/$Al_2O_3$ gel was maintained at 10-15°C (50-60°F) by adding 85 parts by weight of ice. Finally, the pH of the gel was adjusted to 4.5 by adding concentrated sulfuric acid.

To the resulting gel enough ZSM-5 zeolite (0.02-0.05 micron crystal size) was added to give 25% by weight on a dry basis. The mixture was then filtered to remove dissolved salts, reslurried with water to 8.5% solids by weight, homogenized and spray dried at 371°C (700°F) inlet temperature, 177°C (350°F) outlet temperature.

The resultant spray dried product was exchanged with a 5% $(NH_4)_2SO_4$ solution, water washed until the effluent was $SO_4$ = free and dried for at least 16 hours at 121°C (250°F). The sodium content of the final product was 0.03% wt.

EXAMPLE 2

A matrix containing 93% $SiO_2$/7% $Al_2O_3$ was prepared by first mixing 1150 parts by weight of water and 242 parts of sodium silicate (28.8% wt $SiO_2$, 8.9% wt $Na_2O$) and maintained at 10-15°C (50-60°F). Then 17.7 parts of concentrated sulfuric acid (97.3% wt) was added to the mixture at a uniform rate over a 30 minute period. Next, a solution prepared by dissolving 30.5 parts of $Al_2(SO_4)_3$ ·$xH_2O$ (17.2% wt $Al_2O_3$) in 122 parts of water was added uniformly over a 30 minute period. The temperature of the resulting gel was maintained at 10-15°C (50-60°F) by adding 68 parts by weight of ice. Finally, the pH of the gel was adjusted to 4.5 by adding concentrated sulfuric acid.

To the resulting gel, a sufficient quantity of ZSM-5 zeolite (0.2-0.5 micron), a larger crystal size than used in Example 1, was added to give 25% by weight on a dry basis. The mixture was then filtered to remove dissolved salts, reslurried with water to 9% solids by weight, homogenized and spray dried at 371°C (700°F) inlet temperature, 177°C (350°F) outlet temperature.

The resultant spray dried product was ion exchanged with a solution containing 1% wt $NH_4Cl$ and 2% wt $Al_2(SO_4)_3$, water washed both $SO_4$ = and $Cl^-$ free and dried for at least 16 hours at 121°C (250°F). The sodium content of the final product was 0.08% weight.

The ZSM-5 containing catalyst of Examples 1 and 2, along with Super-D, a commercially available cracking catalyst containing Zeolite Y manufactured by the Davison Division of W. R. Grace & Company, were steamed for 10 hours at 788°C (1450°F) in 45% steam/55% air, at atmospheric pressure to simulate the hydrothermal deactivation they would undergo during use in a FCC regenerator. The steamed ZSM-5 catalysts were combined with the steamed Super-D to give combinations containing 2 wt % ZSM-5. These were evaluated in a fixed-fluidized bed test unit at 516°C (960°F) initial temperature, 1.0 minutes on-stream, 3 C/O, 20 WHSV, using Joliet Sour Heavy Gas Oil (JSHGO) as feed. The catalytic results, which are averages of at least two runs, are summarized in the following table.

| Catalyst<br>ZSM-5 Crystal Size | Base<br>- | Ex. 1<br>0.02-0.05 | Ex. 2<br>0.2-0.5 |
|---|---|---|---|
| ZSM Content | | 2 wt % | 2 wt % |
| Conversion, % Vol | 68.7 | 68.8 | 67.5 |
| $C_5^+$ Gasoline, % Vol | 54.1 | 53.5 | 52.0 |
| Total $C_4$'s,% Vol | 15.6 | 16.3 | 15.9 |
| Dry Gas, % Wt | 7.7 | 7.9 | 7.9 |
| Coke, % Wt | 4.1 | 4.2 | 4.1 |
| i-$C_4$, % Vol | 7.2 | 7.6 | 7.5 |
| $C_4^=$, % Vol | 6.4 | 6.7 | 6.4 |
| $C_3^=$, % Vol | 7.0 | 7.1 | 7.5 |
| $C_5^+$ Gasoline + Potential Alkylate, % Vol | 76.4 | 76.4 | 74.9 |
| Outside i-$C_4$, % Vol | 8.1 | 8.0 | 8.1 |
| RON+0, $C_5^+$ Gasoline | 87.2 | 87.7 | 88.1 |
| RON+0, $C_5^+$ Gasoline + Alkylate | 89.2 | 89.6 | 89.9 |

The larger crystal size ZSM-5 (Example 2) retained more of its octane enhancement capacity after the steam treatment, indicating greater stability. This is corroborated by the larger gasoline yield loss associated with it. In a commercial operation, a refiner could lower the makeup rate of a larger crystal size ZSM-5 catalyst to achieve the required gasoline octane from the cracking unit or at the same makeup rate as with a smaller crystal size ZSM-5 catalyst, he could achieve a higher octane gasoline production.

To further substantiate the greater stability of the larger crystal size ZSM-5, the ZSM-5 catalysts of Examples 1 and 2 and the base Super-D catalyst were given an even more severe steam treatment: 25 hrs. at 788°C (1450°F), in 45% steam/55% air, at atmospheric pressure. As in the previous study, composite catalysts containing 2% ZSM-5 of both the larger and smaller size crystals were prepared. Test conditions were altered slightly. C/O ratio was adjusted to 5, and hence the WHSV to 12 to counteract the lower overall activity of the catalysts. The results are summarized below and again are the average of at least two runs.

6

## Severe Steaming Catalytic Results

| Catalyst | Base | Ex. 1 | Ex. 2 |
|---|---|---|---|
| ZSM-5 Crystal Size | - | 0.02-0.05 | 0.2-0.5 |
| ZSM Content | | 2 wt % | 2 wt % |
| Conversion, % Vol | 69.5 | 67.0 | 68.8 |
| $C_5$ + Gasoline, % Vol | 54.4 | 52.5 | 52.1 |
| Total $C_4$'s, % Vol | 16.1 | 15.2 | 16.7 |
| Dry Gas, % Wt | 8.0 | 7.5 | 8.4 |
| Coke, % Wt | 3.9 | 3.9 | 4.2 |
| i-$C_4$, % Vol | 7.1 | 6.8 | 7.5 |
| $C_4$ =, % Vol | 6.9 | 6.5 | 7.4 |
| $C_3$ =, % Vol | 7.6 | 7.4 | 7.9 |
| $C_5$+ Gasoline + Potential Alkylate, % Vol | 78.6 | 75.5 | 77.4 |
| Outside i-$C_4$, % Vol | 9.3 | 9.0 | 9.8 |
| RON+O, $C_5$ + Gasoline | 87.8 | 88.0 | 89.3 |
| RON+O, $C_5$ + Gasoline + Alkylate | 89.7 | 89.8 | 90.8 |

These severe steam results clearly show the superior steam stability of the larger size ZSM-5 crystals. The small ZSM-5 crystals lost virtually all octane enhancement capability while the larger crystals maintained approximately 1 RON + O advantage over the base catalyst.. The lower gasoline yield and higher $C_3$ and $C_4$ gas yields at a slightly lower conversion are further evidence of greater ZSM-5 activity.

EXAMPLE 3

Previous work on ZSM-5 addition in FCC described in U.S. Patent 4,309,279 showed significant octane gains with the addition of relatively small quantities of fresh ZSM-5. The next experiments demonstrate the effect of steam deactivation on additive catalysts with 25% ZSM-5 having a crystallite size of 0.1-0.5 microns in a 93/7 $SiO_2/Al_2O_3$ hydrogel matrix. Two levels of ZSM-5 were employed - 0.25 wt percent for the fresh ZSM-5 and 2 wt percent for the steamed ZSM-5. The results are shown below in Table 1.

In this example, the base catalyst was HEZ-53, marketed by Houdry Division of Air Products and Chemicals, Inc.

The steaming treatment was 10 hours at 788°C (1450°F) in an atmosphere of 45% steam/55% air, at atmospheric pressure.

The test used a fixed-fluidized bed bench unit for 1.0 minute on-stream, at a reaction temperature of 516°C (960°F) using as feed JSHGO.

7

## Table 1

### Comparison of Fresh and Steamed ZSM-5 in Equilibrium HEZ-53 at Constant 4.0 Cat/Oil (15 WHSV $hr^{-1}$).

| Catalyst + Wt % ZSM-5 | Base | + 0.25% | + 2.0% |
|---|---|---|---|
| Steaming | | None | Yes |
| ZSM-5 Crystal size, micron | | 0.2-0.5 | 0.2-0.5 |
| Conversion, % Vol | 59.8 | 61.3 | 58.4 |
| **Product Yields** | | | |
| $C_5^+$ Gasoline, % Vol | 49.1 | 40.1 | 46.7 |
| Total $C_4$'s, % Vol | 11.3 | 18.3 | 12.5 |
| Dry Gas, % Wt | 6.1 | 11.9 | 6.5 |
| Coke, % Wt | 3.7 | 4.1 | 3.7 |
| LFO, % Wt | 35.1 | 31.3 | 35.2 |
| HFO, % Wt | 7.3 | 7.9 | · 8.2 |
| G+D, % Wt | 75.6 | 64.3 | 73.5 |
| $n-C_4$, % Vol | 1.0 | 1.1 | 1.0 |
| $i-C_4$, % Vol | 4.0 | 6.3 | 4.0 |
| $C_4^=$, % Vol | 6.4 | 10.9 | 7.5 |
| $C_3$, 5 % Vol | 1.1 | 2.3 | 1.0 |
| $C_3^=$, % Vol | 5.6 | 13.7 | 6.8 |
| **Potential Alkylate Yields** | | | |
| Alkylate, % Vol | 20.1 | 40.9 | 23.9 |
| $C_5^+$ Gasoline + Alkylate, % Vol | 69.1 | 80.9 | 70.6 |
| Outside $i-C_4$, % Vol | 9.1 | 21.5 | 12.1 |
| **Octane Number RON+0:** | | | |
| $C_5^+$ Gasoline | 88.4 | 92.1 | 89.8 |
| $C_5^+$ Gasoline + Alkylate | 90.6 | 93.0 | 91.3 |

### EXAMPLES 4 AND 5

Further experiments were run on a 0.08 $m^3$/day (0.5 barrel per day pilot plant) using a small crystal ZSM-5 having a crystal size of 0.02 to 0.05 microns and a large crystal ZSM-5 having a crystal size of 0.2 to 0.5 microns. In all tests the additive catalyst, containing 25% high-solids, low-sodium ZSM-5 in a 93/7 silica to alumina hydrogel matrix, was added to give a ZSM-5 level of 3.5 wt percent in the catalyst inventory. No catalyst was added thereafter.

These tests were conducted to achieve maximum yields of distillate, rather than maximum yield of gasoline. Distillate mode operation will be advantageous in the winter, when more fuel oil than gasoline is needed. Distallate mode operation is usually characterized by relatively low severity operation, with reduced conversion.

The base catalyst mixture in Table 3, a commercial equilibrium cracking catalyst, Filtrol 75-F, is composed of rare earth exchange zeolite Y in a silica alumina matrix.

Data indicates significant octane improvements for both ZSM-5 catalysts initially with the ZSM-5 of larger crystallite size retaining its steamed stability more effectively than the smaller crystallite material. These results are shown in Tables 2 and 3.

## Table 2

### (1 of 2)

| Catalyst | Equilibrium HEZ-53 + Large Crystal ZSM-5 | | |
|---|---|---|---|
| Time on stream, hrs. | Base Case | 6 | 51 |

| Operating Conditions: | | | |
|---|---|---|---|
| Riser Top Temp °F/°C | 940/540 | 947/508 | 940/504 |
| Regen Temp, °F/°C | 1348/731 | 1352 /733 | 1369/743 |
| Combined Feed Ratio | 1.5 | 1.5 | 1.5 |
| Cat/Oil | 4.5 | 4.2 | 4.5 |

| Conversion (Vol %) | 48.8 | 54.3 | 54.1 |
|---|---|---|---|

| Product Yields, % | Wt | Vol | Wt | Vol | Wt | Vol |
|---|---|---|---|---|---|---|
| $H_2S$ | 1.18 | – | 1.08 | – | 1.19 | – |
| $H_2$ | 0.13 | – | 0.13 | | | – |
| 0.15 | – | | | | | |
| $C_1$ | 0.79 | – | 0.75 | – | 0.79 | – |
| $C_2$ | 1.25 | – | 1.51 | – | 1.26 | – |
| $C_3$ | 0.68 | 1.24 | 1.02 | 1.87 | 0.82 | 1.50 |
| $C_3$ = | 2.82 | 5.01 | 6.83 | 12.12 | 4.61 | 8.19 |
| $i-C_4$ | 1.03 | 1.70 | 1.46 | 2.40 | 1.30 | 2.14 |
| $n-C_4$ | 0.41 | 0.66 | 0.52 | 0.83 | 0.46 | 0.72 |
| $C_4$ = | 4.23 | 6.44 | 8.13 | 12.39 | 6.51 | 9.91 |
| $C_5$ + Gasoline | 30.8 | 38.5 | 26.7 | 33.5 | 30.0 | 37.6 |
| Light Cycle Oil | 7.9 | 48.4 | 35.2 | 35.5 | 44.1 | 44.2 |
| Heavy Cycle Oil +<br>  Motor Column Bottom | 3.08 | 2.81 | 11.3 | 10.2 | 1.92 | 1.78 |
| Coke | 5.68 | – | 5.38 | – | 6.94 | – |
| Total | 100.0 | 104.8 | 100.0 | 108.8 | 100.0 | 106.0 |

### Gasoline Distillate Alkylate (G+D+A) Analysis

| | | | |
|---|---|---|---|
| Potential Alkylate | 19.2 | 40.9 | 30.3 |
| Outside $i-C_4$ Required | 11.2 | 25.2 | 18.2 |
| Potential G+D+A | 106.1 | 109.9 | 112.1 |
| Potential G+A | 57.7 | 74.4 | 67.9 |
| G+D | 86.9 | 69.0 | 81.8 |

### $C_5$ Gasoline Analysis

| | | | |
|---|---|---|---|
| RON+0 | 92.4 | 94.3 | 94.4 |

### Table 2
### (2 of 2)

| Catalyst | Equilibrium HEZ-53 + Large Crystal ZSM-5 | | | | | |
|---|---|---|---|---|---|---|
| Time on stream, hrs. | 74 | | 136 | | 347 | |
| | | | | | | |
| Operating Conditions: | | | | | | |
| Riser Top Temp °F/°C | 939/504 | | 946/508 | | 946/508 | |
| Regen Temp, °F/°C | 1366/741 | | 1341/727 | | 1332/722 | |
| Combined Feed Ratio | 1.5 | | 1.5 | | 1.5 | |
| Cat/Oil | 4.4 | | 4.3 | | 4.2 | |
| | | | | | | |
| Conversion (Vol %) | 53.6 | | 51.1 | | 49.5 | |

| Product Yields, % | Wt | Vol | Wt | Vol | Wt | Vol |
|---|---|---|---|---|---|---|
| $H_2S$ | 1.23 | – | 1.19 | – | 1.17 | – |
| $H_2$ | 0.16 | – | 0.15 | – | 0.16 | – |
| $C_1$ | 0.84 | – | 0.80 | – | 0.80 | – |
| $C_2$ | 1.33 | – | 1.35 | – | 1.33 | – |
| $C_3$ | 0.85 | 1.55 | 0.80 | 1.45 | 0.73 | 1.33 |
| $C_3$ = | 4.30 | 7.62 | 3.78 | 6.70 | 2.88 | 5.11 |
| $i\text{-}C_4$ | 1.31 | 2.15 | 1.06 | 1.75 | 0.97 | 1.59 |
| $n\text{-}C_4$ | 0.46 | 0.73 | 0.44 | 0.69 | 0.51 | 0.80 |
| $C_4$ = | 6.01 | 9.15 | 5.52 | 8.40 | 4.38 | 6.66 |
| $C_5$ + Gasoline | 30.3 | 37.9 | 30.3 | 37.8 | 31.4 | 39.1 |
| Light Cycle Oil | 44.1 | 44.2 | 45.8 | 46.1 | 47.7 | 48.2 |
| Heavy Cycle Oil + | | | | | | |
| Motor Column Bottom | 2.46 | 2.18 | 3.15 | 2.87 | 2.52 | 2.27 |
| Coke | 6.68 | – | 5.68 | – | 5.43 | – |
| | | | | | | |
| Total | 100.0 | 105.5 | 100.0 | 105.4 | 100.0 | 105.1 |

### Gasoline Distillate Alkylate (G+D+A) Analysis

| | | | |
|---|---|---|---|
| Potential Alkylate | 28.0 | 25.3 | 19.7 |
| Outside $i\text{-}C_4$ Required | 16.7 | 15.2 | 11.6 |
| Potential G+D+A | 112.4 | 109.2 | 107.0 |
| Potential G+A | 65.9 | 63.1 | 58.8 |
| G+D | 82.1 | 83.9 | 87.3 |

$C_5$ Gasoline Analysis

| | | | |
|---|---|---|---|
| RON+O | 93.8 | 93.7 | 92.5 |

Table 3
(1 of 2)

| Catalyst | Equilibrium 75-F + Small Crystal ZSM-5 | | |
|---|---|---|---|
| Time on stream, hrs. | Base Case | 4 | 50 |

Operating Conditions:

| | | | |
|---|---|---|---|
| Riser Top Temp °F/°C | 983/503 | 941/505 | 938/503 |
| Regen Temp, °F/°C | 1330/721 | 1337/725 | 1336/724 |
| Combined Feed Ratio | 1.5 | 1.5 | 1.5 |
| Cat/Oil | 4.3 | 4.9 | 5.0 |
| Conversion (Vol %) | 42.8 | 53.6 | 50.3 |

| Product Yields, % | Wt | Vol | Wt | Vol | Wt | Vol |
|---|---|---|---|---|---|---|
| $H_2S$ | 1.08 | – | 1.08 | – | 1.08 | – |
| $H_2$ | 0.10 | – | 0.09 | – | 0.11 | – |
| $C_1$ | 0.80 | – | 0.74 | – | 0.98 | – |
| $C_2$ | 1.52 | – | 1.48 | – | 1.82 | – |
| $C_3$ | 0.73 | 1.34 | 1.04 | 1.91 | 1.01 | 1.85 |
| $C_3$ = | 2.08 | 3.68 | 5.85 | 10.41 | 3.46 | 6.16 |
| $i\text{-}C_4$ | 0.70 | 1.15 | 1.43 | 2.36 | 0.97 | 1.60 |
| $n\text{-}C_4$ | 0.40 | 0.63 | 0.48 | 0.77 | 0.45 | 0.72 |
| $C_4$ = | 3.20 | 4.88 | 7.48 | 11.42 | 4.89 | 7.47 |
| $C_5$ + Gasoline | 27.7 | 34.3 | 27.8 | 35.1 | 29.9 | 37.1 |
| Light Cycle Oil | 47.1 | 48.4 | 39.3 | 39.2 | 44.8 | 45.5 |
| Heavy Cycle Oil + Motor Column Bottom | 9.5 | 8.8 | 7.9 | 7.2 | 4.7 | 4.2 |
| Coke | 5.1 | – | 5.3 | – | 5.8 | – |
| Total | 100.0 | 103.2 | 100.0 | 108.4 | 100.0 | 104.6 |

Gasoline Distillate Alkylate (G+D+A) Analysis

| | | | |
|---|---|---|---|
| Potential Alkylate | 14.3 | 36.5 | 22.8 |
| Outside $i\text{-}C_4$ Required | 8.4 | 22.2 | 13.7 |
| Potential G+D+A | 97.0 | 110.8 | 105.4 |
| Potential G+A | 48.6 | 71.6 | 59.9 |
| G+D | 82.7 | 74.3 | 82.6 |

$C_5$ Gasoline Analysis

| | | | |
|---|---|---|---|
| RON+O | 91.6 | 94.2 | 92.3 |

## Table 3
(2 of 2)

| Catalyst | Equilibrium 75-F + Small Crystal ZSM-5 | | |
|---|---|---|---|
| Time on stream, hrs. | 72 | 144 | 370 |

Operating Conditions:

| | | | |
|---|---|---|---|
| Riser Top Temp °F/°C | 937/503 | 938/503 | 942/506 |
| Regen Temp, °F/°C | 1337/725 | 1336/724 | 1335/724 |
| Combined Feed Ratio | 1.5 | 1.5 | 1.6 |
| Cat/Oil | 4.1 | 4.0 | 4.6 |
| Conversion (Vol %) | 42.8 | 42.6 | 44.2 |

| Product Yields, % | Wt | Vol | Wt | Vol | Wt | Vol |
|---|---|---|---|---|---|---|
| $H_2S$ | 1.05 | – | 1.06 | – | 1.06 | – |
| $H_2$ | 0.10 | – | 0.11 | – | – | |
| | 0.11 | – | | | | |
| $C_1$ | 0.77 | – | 0.76 | – | 0.77 | – |
| $C_2$ | 1.51 | – | 1.53 | – | 1.51 | – |
| $C_3$ | 0.83 | 1.51 | 0.81 | 1.49 | 0.81 | 1.48 |
| $C_3 =$ | 2.80 | 4.98 | 2.61 | 4.65 | 2.57 | 4.58 |
| $i-C_4$ | 0.73 | 1.21 | 0.68 | 1.12 | 0.75 | 1.24 |
| $n-C_4$ | 0.38 | 0.60 | 0.39 | 0.62 | 0.38 | 0.61 |
| $C_4 =$ | 4.00 | 6.11 | 3.82 | 5.83 | 3.89 | 5.94 |
| $C_5 +$ Gasoline | 26.5 | 33.1 | 26.7 | 33.5 | 27.9 | 34.6 |
| Light Cycle Oil | 45.0 | 46.1 | 45.6 | 46.7 | 45.7 | 46.9 |
| Heavy Cycle Oil + Motor Column Bottom | 11.9 | 11.1 | 11.5 | 10.7 | 9.8 | 8.8 |
| Coke | 4.4 | – | 4.4 | – | 4.8 | – |
| Total | 100.0 | 104.7 | 100.0 | 104.6 | 100.0 | 104.2 |

Gasoline Distillate Alkylate (G+D+A) Analysis

| | | | |
|---|---|---|---|
| Potential Alkylate | 18.6 | 17.5 | 17.6 |
| Outside $i-C_4$ Required | 11.3 | 10.6 | 10.6 |
| Potential G+D+A | 97.8 | 97.7 | 99.1 |
| Potential G+A | 51.7 | 51.0 | 52.2 |
| G+D | 79.2 | 80.2 | 81.5 |

$C_5$ Gasoline Analysis

| | | | |
|---|---|---|---|
| RON+0 | 91.9 | 92.4 | 92.0 |

EXAMPLES 6 AND 7

The effect of ZSM-5 crystal size was demonstrated on a fixed fluidized bed bench unit by comparing fresh and steamed small crystal ZSM-5 (crystal size .02-.05 microns) with fresh and steamed large crystal ZSM-5 (crystal size 0.2-0.5 microns). Results are presented in Tables 4 and 5. In both cases the large crystal ZSM-5 exhibits greater hydrothermal stability. The fresh catalysts exhibit comparable effects in Table 4 whereas in Table 5, the fresh ZSM-5 of larger crystallite size appears somewhat more active.

## Table 4

Comparison[1] of Fresh and Steamed[2] ZSM-5 Of Varied
Crystallite Sizes in Super-D[2] At
Constant 3.0 Cat/Oil (20 WHSV hr-1)

| | Super-D | +.25% Fresh ZSM-5B | +.25% Fresh ZSM-5A | +2% Stm'd ZSM-5B | +2% Stm'd ZSM-5A |
|---|---|---|---|---|---|
| ZSM-5 Crystal size, microns | – | 0.02-0.05 | 0.2-0.5 | 0.02-0.05 | 0.2-0.5 |
| Conversion, % Vol | 70.2 | 69.6 | 67.4 | 69.3 | 67.4 |
| **Product Yields** | | | | | |
| $C_5$ + Gasoline, % Vol | 55.2 | 52.6 | 46.9 | 54.6 | 52.6 |
| Total $C_4$'s, % Vol | 16.1 | 17.6 | 22.1 | 15.9 | 15.1 |
| Dry Gas, % Wt | 7.8 | 8.4 | 10.2 | 7.9 | 7.7 |
| Coke, % Wt | 4.2 | 4.3 | 4.6 | 4.0 | 4.1 |
| Light Fuel Oil, % Wt | 26.1 | 25.8 | 26.4 | 26.7 | 27.9 |
| Heavy Fuel Oil, % Wt | 6.5 | 7.4 | 6.2 | 6.8 | 7.5 |
| G+D. % Wt | 71.3 | 68.7 | 65.0 | 71.2 | 71.0 |
| $n-C_4$, % Vol | 2.2 | 2.2 | 2.4 | 2.1 | 1.8 |
| $i-C_4$, % Vol | 7.2 | 8.2 | 10.7 | 7.1 | 7.1 |
| $C_4$ =, % Vol | 6.7 | 7.2 | 9.0 | 6.7 | 6.2 |
| $C_3$, % Vol | 2.4 | 2.5 | 3.0 | 2.4 | 2.4 |
| $C_3$ =, % Vol | 6.8 | 8.1 | 10.3 | 7.2 | 7.3 |
| **Potential Alkylate Yields:** | | | | | |
| Alkylate, % Vol | 22.5 | 25.5 | 32.1 | 23.2 | 22.3 |
| $C_5$ + Gasoline + Alkylate, % Vol | 77.7 | 78.1 | 79.0 | 77.8 | 74.9 |
| Outside $i-C_4$, % Vol | 8.2 | 9.2 | 11.3 | 8.7 | 8.2 |
| **Octane Number RON+0:** | | | | | |
| $C_5$ + Gasoline | 86.4 | 88.0 | 88.7 | 87.0 | 88.3 |
| $C_5$ + Gasoline + Alkylate | 88.6 | 90.0 | 90.8 | 89.1 | 89.9 |

(1) Fixed-Fluidized Bed Bench Unit, 1.0 Minute On-Stream.
Reaction Temperature: 516°C (960°F); Feed: JSHGO.
(2) Steamed 10 hrs, 788°C (1450°F), 45/55 steam/air, atmospheric pressure.

13

## Table 5

Comparison [1] of Fresh and Steamed[2] ZSM-5 Of Varied
Crystallite Sizes in Super-D[3] At
Constant 2.0 Cat/Oil (30 WHSV hr-1)

|  | Super-D | +.25% Fresh ZSM-5B | +.25% Fresh ZSM-5A | +2% Stm'd ZSM-5B | +2% Stm'd ZSM-5A |
|---|---|---|---|---|---|
| ZSM-5 Crystal size, microns | - | 0.02-0.05 | 0.2-0.5 | 0.02-0.05 | 0.2-0.5 |
| Conversion, % Vol | 66.8 | 67.7 | 67.2 | 66.5 | 65.3 |
| **Product Yields** | | | | | |
| $C_5$ + Gasoline, % Vol | 55.7 | 49.7 | 50.3 | 52.7 | 51.1 |
| Total $C_4$'s, % Vol | 14.0 | 19.3 | 18.4 | 14.9 | 19.0 |
| Dry Gas, % Wt | 6.0 | 7.4 | 7.7 | 7.3 | 6.9 |
| Coke, % Wt | 3.7 | 4.0 | 3.8 | 3.6 | 3.8 |
| Light Fuel Oil, % Wt | 27.2 | 26.4 | 26.9 | 26.6 | 25.8 |
| Heavy Fuel Oil, % Wt | 8.6 | 8.5 | 8.4 | 9.4 | 8.9 |
| G+D. % Wt | 72.7 | 67.7 | 68.3 | 70.2 | 68.2 |
| $n-C_4$, % Vol | 1.8 | 2.2 | 2.1 | 1.8 | 2.1 |
| $i-C_4$, % Vol | 7.1 | 9.3 | 9.0 | 7.0 | 9.1 |
| $C_4$ =, % Vol | 5.1 | 8.1 | 7.3 | 6.0 | 7.9 |
| $C_3$, % Vol | 2.2 | 2.2 | 2.5 | 2.3 | 2.2 |
| $C_3$ =, % Vol | 4.9 | 7.5 | 7.6 | 6.9 | 6.5 |
| **Potential Alkylate Yields:** | | | | | |
| Alkylate, % Vol | 16.7 | 25.1 | 24.8 | 21.5 | 24.0 |
| $C_5$ + Gasoline + Alkylate, % Vol | 72.3 | 74.9 | 75.1 | 74.2 | 75.2 |
| Outside $i-C_4$, % Vol | 4.3 | 7.8 | 7.9 | 7.7 | 7.2 |
| **Octane Number RON+0:** | | | | | |
| $C_5$ + Gasoline | 84.1 | 87.6 | 87.3 | 85.6 | 86.9 |
| $C_5$ + Gasoline + Alkylate | 86.4 | 89.8 | 89.5 | 88.0 | 89.2 |

(1) Fixed-Fluidized Bed Bench Unit, 1.0 Minute On-Stream.
   Reaction Temperature: 516°C (960°F); Feed: JSHGO.
(2) Steamed 10 hrs, 788°C (1450°F), 45/55 steam/air, atmospheric pressure.
(3) Steamed 4 hrs, 760°C (1400°F), 100% steam, atmospheric pressure.

The Joliet Sour Heavy Gas Oil (JSHGO) feed properties are set forth below:
The Joliet Sour Heavy Gas Oil , JSHGO, feed properties are set forth below in Table 6:

Table 6

| Chargestock | Joliet Sour Heavy Gas Oil |
|---|---|
| Gravity, ° API | 24.3 |
| Density, g/cc | 0.91 |
| Aniline Pt. ° F/° C | 171/77 |
| Sulfur, Wt % | 1.87 |
| Nitrogen, Wt. % | 0.10 |
| Basic Nitrogen, ppm | 327 |
| Conradson Carbon, Wt % | 0.28 |
| Viscosity, KV at 210° F/99° C | 3.6 |
| Bromine No. | 4.2 |
| R.I. at 70° F/21° C | 1.5080 |
| Hydrogen, Wt % | 12.3 |
| Molecular Weight | 358 |
| Pour Point, ° F/° C | 85/29 |
| Paraffins, Wt % | 23.5 |
| Naphthenes, Wt % | 32.0 |
| Aromatics, Wt % | 44.5 |
| CA, Wt % | 18.9 |

## Claims

1. A process for the catalytic cracking of a petroleum fraction in the presence of a cracking catalyst under cracking conditions, during which process coked catalyst is formed and is passed through a regenerator wherein the coke deposits are burned with formation of steam, carbon oxides and hot regenerated catalyst, characterised by adding to the cracking catalyst from 0.1 to 50 weight percent based on cracking catalyst of an additive catalyst comprising a zeolite dispersed in a matrix, said zeolite having a constraint index of 1 to 12, a silica to alumina role ratio greater than 12, and a crystal size of 0.2 to 5 μm (microns).

2. A process according to claim 1, wherein the additive zeolite has a crystal size of 0.3 to 3 μm.

3. A process according to claims 1 or 2, wherein the additive comprises 0.1 to 20 weight % of the cracking catalyst.

4. A process according to any one of claims 1 to 3, wherein the additive zeolite is selected from ZSM-5, ZSM-11 ZSM-12, ZSM-23, ZSM-35, ZSM-38 and mixtures of any two or more thereof.

5. A process according to any one of claims 1 to 4, wherein the cracking catalyst contains a large pore zeolite selected from zeolite X, zeolite Y and naturally occurring faujasite.

6. A process according to any one of claims 1 to 4, wherein the cracking catalyst is amorphous.

7. A process according to any one of claims 1 to 6, wherein the cracking process is fluidized catalytic cracking.

8. A process according to any one of claims 1 o 6, wherein the cracking process is Thermofor catalytic cracking.

## Revendications

1. Un procédé de craquage catalytique d'une fraction de pétrole en présence d'un catalyseur de craquage dans des conditions de craquage, procédé pendant lequel se forme du catalyseur coké que l'on fait passer à travers un régénérateur dans lequel sont brûlés les dépôts de coke avec formation de vapeur, oxydes de carbone et catalyseur régénéré chaud, caractérisé en ce que l'on ajoute au catalyseur de craquage de 0,1 à 50 % par rapport au poids du catalyseur de craquage d'un additif catalyseur comprenant une zéolite dispersée dans une matrice, l'indice de contrainte de cette zéolite étant compris entre 1 et 12, son rapport molaire silice sur alumine supérieur à 12 et la dimension de ses cristaux comprise entre 0,2 et 5$\mu$m (microns).

2. Un procédé selon la revendication 1, caractérisé en ce que la dimension des cristaux de la zéolite additive est comprise entre 0,3 et 3 $\mu$m.

3. Un procédé selon les revendications 1 et 2, caractérisé en ce que l'additif comprend de 0,1 à 20% en poids de catalyseur de craquage.

4. Un procédé selon l'une quelconque des revendications 1 à 3, caractérisé en ce que la zéolite de l'additif est choisie parmi ZSM-5, ZSM-11, ZSM-12, ZSM-23, ZSM-35, ZSM-38 et leurs mélanges de deux ou de plus de deux d'entres elles.

5. Un procédé selon l'une quelconque des revendications 1 à 4, caractérisé en ce que le catalyseur de craquage contient une zéolite à grands pores choisie parmi zéolite X, zéolite Y et faujasite se présentant à l'état naturel.

6. Un procédé selon l'une quelconque des revendications 1 à 4, caractérisé en ce que le catalyseur de craquage est amorphe.

7. Un procédé selon l'une quelconque des revendications 1 à 6, caractérisé en ce que le procédé de craquage est un craquage catalytique en lit fluidisé.

8. Un procédé selon l'une quelconque des revendications 1 à 6, caractérisé en ce que le procédé de craquage est un craquage catalytique Thermofor.

**Patentansprüche**

1. Verfahren zum katalytischen Cracken einer Erdölfraktion in Gegenwart eines Crackkatalysators unter Crackbedingungen, wobei bei diesem Verfahren verkokter Katalysator gebildet und durch einen Regenerator geleitet wird, in dem die Koksablagerungen abgebrannt werden, wobei Dampf, Kohlendioxide und heißer regenerierter Katalysator gebildet werden, gekennzeichent durch Zugabe von 0,1 - 50 Gew.-%, bezogen auf den Crackkatalysator, eines Katalysatorzusatzes zum Crackkatalysator, der einen in eine Matrix dispergierten Zeolith umfaßt, wobei dieser Zeolith einen Zwangsindex von 1 - 12, ein Siliciumdioxid/Aluminiumoxid-Molverhältnis von mehr als 12 und eine Kristallgröße von 0,2 - 5 $\mu$m (Micron) aufweist.

2. Verfahren nach Anspruch 1, worin der Zeolithzusatz eine Kristallgröße von 0,3 - 3 $\mu$m aufweist.

3. Verfahren nach Anspruch 1 oder 2, worin der Zusatz 0,1 - 20 Gew.-% des Crackkatalysators umfaßt.

4. Verfahren nach einem der Ansprüche 1 bis 3, worin der Zeolithzusatz aus ZSM-5, ZSM-11, ZSM-12, ZSM-23, ZSM-35, ZSM-38 und Mischungen von jeweils zwei oder mehreren davon ausgewählt ist.

5. Verfahren nach einem der Ansprüche 1 bis 4, worin der Crackkatalysator einen Zeolith mit großen Poren enthält, der aus Zeolith X, Zeolith Y und natürlich vorkommendem Faujasit ausgewählt ist.

6. Verfahren nach einemm der Ansprüche 1 bis 4, worin der Crackkatalysator amorph ist.

7. Verfahren nach einem der Ansprüche 1 bi 6, worin das Crackverfahren ein katalytisches Wirbelschichtcracken ist.

8. Verfahren nach einem der Ansprüche 1 bis 6, worin das Crackverfahren ein katalytisches Thermofor-Cracken ist.